Europäisches Patentamt

European Patent Office

Office européen des brevets

(19)

(11) Veröffentlichungsnummer: **0 199 936 B1**

# EUROPÄISCHE PATENTSCHRIFT

(12)

(45) Veröffentlichungstag der Patentschrift: **29.04.92**

(51) Int. Cl.⁵: **H05B 7/148**, F27D 11/08

(21) Anmeldenummer: **86103147.4**

(22) Anmeldetag: **08.03.86**

(54) **Verfahren und Vorrichtung zur Regelung von Lichtbogenöfen.**

(30) Priorität: **03.04.85 DE 3512189**

(43) Veröffentlichungstag der Anmeldung:
**10.12.86 Patentblatt 86/45**

(45) Bekanntmachung des Hinweises auf die
Patenterteilung:
**29.04.92 Patentblatt 92/18**

(84) Benannte Vertragsstaaten:
**AT FR GB SE**

(56) Entgegenhaltungen:
**DE-A- 2 440 960**
**DE-B- 1 159 112**

(73) Patentinhaber: **MANNESMANN Aktiengesellschaft**
**Mannesmannufer 2**
**W-4000 Düsseldorf 1(DE)**

(72) Erfinder: **Bretthauer, Karlheinz, Prof. Dr.**
**Berliner Strasse 45**
**W-3392 Clausthal-Zellerfeld(DE)**
Erfinder: **Obenauf, Hans-Dietrich**
**Rollstrasse 48**
**W-3392 Clausthal-Zellerfeld(DE)**

(74) Vertreter: **Meissner, Peter E., Dipl.-Ing. et al**
**Patentanwaltsbüro Meissner & Meissner,**
**Herbertstrasse 22**
**W-1000 Berlin 33(DE)**

EP 0 199 936 B1

## Beschreibung

Die Erfindung betrifft ein Verfahren zur Regelung von Lichtbogenöfen mit verstellbarer Transformatorspannung und verstellbaren Elektrodenhöhenständen und mit einer auf die Elektrodenverstellung unmittelbar einwirkenden Lichtbogenspannungsregelung.

Ein Lichtbogenofen verfügt über zwei Stellgrößen: Die Transformatorspannung oder Ofenspannung, die mit Hilfe eines Stufenschalters am Transformator einstellbar ist und die Höhenlage des Tragarmes, d.h. den Höhenstand der Elektrodenspitze über dem Bad (Schrott), der für die sich einstellende Lichtbogenlänge bestimmend ist.

Sieht man von Unsymmetrien und ihrem möglichen Ausgleich durch unterschiedliche Stellwerte in den drei Phasen ab, dann lassen sich mit zwei Stellgliedern auch nur zwei Betriebsgrößen unabhängig voneinander einstellen. Für den praktischen Ofenbetrieb interessante Regelgrößen können sein: Die Lichtbogenlänge, die näherungsweise der Lichtbogenspannung proportional ist, der Lichtbogenstrom, die Lichtbogenleistung oder eine für den Zustellverschleiß maßgebliche Kenngröße aus Lichtbogenstrom und Lichtbogenspannung. Die Ofenspannung (Transformatorspannung) kann hingegen nur als Stellgröße und nicht als Regelgröße verwendet werden, da die Ofenspannung nur als Hilfsgröße für die Durchführung des Ofenprozesses dienen kann.

In der Praxis wird häufig die Ofenspannung und damit die Transformatoreinstellung von der Prozeßführung vorgegeben. In diesen Fällen besteht nur noch ein Freiheitsgrad über die Elektrodenhöhenstandseinstellung, d.h. über die Lichtbogenlänge und Lichtbogenspannung. Zu diesen Einstellung (Elektrodenregelung) wird vorwiegend die sogenannte Impedanzregelung verwendet, d.h., daß für jede Elektrode der Quotient der zwischen Hochstrombahn und Badsternpunkt gemessenen Spannung mit dem Strom der betreffenden Hochstrombahn gebildet wird. Dieser Meßwert ist dann die Istgröße der Impedanzregelung Abgesehen davon, daß diese Regelungsart nur bei nicht zu großen Abweichungen aus Normalbetriebszuständen in der Tendenz richtig auf den Elektrodenhöhenstand einwirkt, hat sie doch den Nachteil, daß die Impedanz kein zuverlässiges Maß für die Lichtbogenlängen ist.

Aus der DE-AS 11 59 112 ist auch eine Leistungsregelung bekannt, bei der die maximale Lichtbogenleistung ergebende Lichtbogenlänge dadurch gefunden werden soll, daß der Kuppenwert der zu messenden Lichtbogenspannung in einem bestimmten Verhältnis zur Netzspannung steht. Schon die in der genannten Schrift beschriebene unsichere Meßwerterfassung führt dazu, daß die der betreffenden Anmeldung zugrundeliegende Aufgabe nicht oder nur unvollständig gelöst wird.

Schließlich ist aus der DE-AS 24 40 960 eine Verschleißgrößenregelung eines Lichtbogenofens bekannt, bei der die aus einer Messung gewonnene Lichtbogenspannung (Istwert) und ein aus einem Sollwert des Lichtbogenwiderstandes und dem Lichtbogenstrom mittels eines Multiplikators gebildeter Wert der Lichtbogenspannung als Sollwert einem Lichtbogenspannungsregler zugeführt werden und dem eine den Zustellungsverschleißkoeffizienten in Abhängigkeit von der Lichtbogenspannung und dem Lichtbogenstrom ermittelnde Einrichtung überlagert ist, deren Ausgangssignal einen Zusatzsollwert für den Lichtbogenspannungsregler bildet

Abgesehen von den zum Teil mit erheblichen Nachteilen behafteten Regelungsvorschlägen gibt es nach dem Stand der Technik keine eindeutige Lehre für ein Verfahren zur Regelung von Lichtbogenöfen, das besagt, welche Regelgrößen bei den entsprechenden Betriebszuständen des Lichtbogenofens und den gegebenen Vorgaben verwendet werden sollen.

Aus der Schrift DE-OS 24 40 960 ist ebenfalls eine Einrichtung zur Regelung der Lichtbogenlänge in Drehstromlichtbogenöfen bekannt, bei dem jeder Elektrode ein Lichtbogenspannungsregler zugeordnet ist, dem als Zusatzsollwert das Ausgangssignal zu je einer Einrichtung zugeführt ist, die den Zustellungsverschleißkoeffizienten in Abhängigkei von der Lichtbogenspannung und den Lichtbogenstrom regelt.

Aus dieser Schrift ist bekannt, den Stromregler danach auszuwählen, ob ein in allen drei Phasen gleichmäßig zu verstellender Ofentransformator zur Verfügung steht, oder ob ein Transformator mit in jedem Strang getrennt verstellbarer Ofenspannung vorhanden ist. Hier ist aber kein Hinweis auf die Anordnung zweier Stromregler zu entnehmen, bei der die Möglichkeit besteht, einen Stromregler danach auszuwählen, welche zweite Regelgröße verwendet wird.

Aufgabe der Erfindung ist es daher, ein Verfahren zur Regelung von Lichtbogenöfen anzugeben, das eine exakte wirtschaftliche und technisch ohne großen Aufwand realisierbare Einstellung der Lichtbogenspannung und der Elektrodenhöhenstandsstellung ermöglicht,und eine Vorrichtung zu dessen Durchführung zu schaffen.

Die Aufgabe wird durch das im Anspruch 1 beschriebene Verfahren gelöst. Danach sollen jeweils maximal zwei der frei wählbaren Regelgrößen Lichtbogenspannung, Lichtbogenstrom, Lichtbogenleistung und Verschleißgröße auf die beiden Stellglieder Transformatorspannung und Elektrodenverstellung einwirken. Die Ofenspannung kann lediglich als Stellgröße der Transformatorspannung dienen. Dabei soll die Lichtbogenleistungsregelung stets auf das Stellglied Transformatorspannung, eine Verschleißgrößenregelung stets auf das Stellglied Elektrodenhöhenstand und eine Stromregelung auf das verbleibende Stellglied einwirken. Bei fest eingestellter Transformatorspannung werden entweder die Bogenspannung oder der Strom (oder der Verschleiß, wie oben erwähnt) über die Lichtbogenlänge eingeregelt. Bei über die Lichtbogenlänge eingestellter Bogenspannung wird der Strom (oder die Leistung) über die Transformatorspannung eingestellt.

Nach der gegebenen technischen Lehre bieten sich also acht Kombinationen an: Drei Kombinationen, bei denen die Trafospannung fest eingestellt ist und die Bogenspannung, der Strom oder der Verschleiß über die Lichtbogenlänge eingestellt wird; zwei Kombinationen, bei denen die Bogenspannung über die Lichtbogenlänge und über die Trafospannung entweder der Strom oder die Leistung eingestellt werden. Bei der Kombination Lichtbogenstrom-Leistung wird der Strom über die Lichtbogenlänge eingestellt und die Leistung über die Trafospannung. Kombiniert man den Lichtbogenstrom mit der Verschleißgröße, so wird der Verschleiß über die Lichtbogenlänge eingestellt, der Strom über die Trafospannung. Schließlich ist es in einer letzten Kombination auch möglich, den Verschleiß über die Lichtbogenlänge und die Leistung über die Transformatorspannung einzustellen. Die Kombination Leistung mit Ofenspannung (Transformatorspannung und Verschleiß mit Bogenspannung sind auszuschließen. Die Zuordnungen bzw. Ausschlüsse der genannten Regelanordnung begründen sich wie folgt:

Die Lichtbogenleistung ist der zeitliche Mittelwert des Produktes aus Lichtbogenspannung und Lichtbogenstrom, die aus Messungen gewonnen werden können. Eine Lichtbogenleistungsregelung, die unmittelbar auf die Elektrodenverstellung wirken würde, wäre zwangsläufig instabil und scheidet daher ohnehin aus. Eine Lichtbogenleistungsregelung, die der Lichtbogenspannungsregelung als Führungsgröße dient, ist in der Wirkungsrichtung nicht eindeutig, wie das Kreisdiagramm für den Lichtbogenofen ergibt. So gibt es für ein und dieselbe Lichtbogenleistung mehrere Betriebszustände, bei denen die Forderung nach höherer Lichtbogenleistung in bestimmten Fällen zu einer Verkürzung des Lichtbogens, in anderen Fällen hingegen zu einer Verlängerung des Lichtbogens führen müßte. Eine der Lichtbogenspannungsregelung überlagerte Leistungsregelung bedürfte daher zusätzlicher Rechenschaltungen, um die richtige Führungsgröße für den Lichtbogenspannungsregelkreis liefern zu können. Aus diesem Grund ist die Kombination Leistung mit Ofenspannung ausgeschlossen

Wirkt die Leistungsregelung jedoch auf das Stellglied Transformatorspannung (Ofenspannung) dann ist die Wirkungsrichtung eindeutig, so daß für eine Leistungsregelung nur eine Einwirkung auf die Transformatorspannung vorzusehen ist. Gleichgültig, ob eine Stromregelung oder eine Lichtbogenspannungsregelung auf die Elektrodenregelung wirkt, eine Erhöhung der Transformatorspannung bewirkt eine Vergrößerung der Lichtbogenleistung und umgekehrt. Es ist daher zweckmäßig, die Lichtbogenleistungsregelung über die Stellgröße Transformatorspannung wirken zu lassen und die zweite zu regelnde Größe, nämlich die Bogenspannung oder den Strom oder den Verschleiß, über die Elektrodenregelung.

Darüber hinaus hat sich folgendes gezeigt. Während eine Impedanzregelung, also die Regelung auf den Quotienten Lichtbogenspannung und Lichtbogenstrom, gegenüber einer reinen Stromregelung eine verbesserte Entkopplung zwischen den drei Regelkreisen der drei Elektrodenregelungen bringt, würde eine auf die Elektrodenregelung wirkende Leistungsregelung das Gegenteil bewirken. Ohne zusätzliche Maßnahmen würde die Leistungsregelung wegen der auftretenden Kopplung zwischen den drei Regelkreisen instabil werden können.

Auch aus diesem Grund empfiehlt es sich, die Leistungsregelung auf die Stellgröße Transformatorspannung wirken zu lassen.

Es hat sich auch gezeigt, daß die Lichtbogenlänge einen wesentlich größeren Einfluß auf den Zustellverschleiß hat als der Lichtbogenstrom. Dies ist dadurch zu erklären, daß ein langer Lichtbogen mehr Strahlungsfläche gegenüber der Ofenzustellung bietet, insbesondere wenn der obere Teil der Lichtbogenlänge nicht mehr von der Schlacke abgeschattet wird. Außerdem entwickelt ein langer Lichtbogen eine intensivere Gasströmung, die aufgrund der sich einstellenden Schräglage des Lichtbogens von der Badoberfläche auf die Ofenwand (Zustellung) abgelenkt wird. Die Verschleißgröße kann also vorzugsweise über die Lichtbogelänge, d.h. über die Lichtbogenspannung, beeinflußt werden. Deshalb ist für die Regelgröße Zustellungsverschleiß ausschließlich eine Einwirkung auf die Elektrodenregelung, d.h. auf die Führungsgröße für die Lichtbogenspannungsregelung vorzusehen. Wege der starken Abhängigkeit der Verschleißgröße von der Lichtbogenlänge (Lichtbogenspannung) ist jedoch eine Kombination der Regelgrößen Verschleiß und Lichtbogenspannung auszuschließen.

Die Stromregelung muß stets auf die jeweils verbleibende Stellgröße einwirken, d.h. bei vorgebener Transformatorspannung (Ofenspannung) müssen die Stromregelungen in die Elektrodenregelungen eingreifen, d.h. sie müssen die Sollwerte der Lichtbogenspannung zur Führungsgröße machen. Der Stromregelkreis ist dem Lichtbogen-Spannungsregelkreis zu überlagern. Wie dem Kreisdiagramm für den Lichtbogenofen mit linearen ohmschen Lichtbogenwiderstand zu entnehmen ist, wachsen die Stromstärken und der Phasenwinkel mit Verkürzung des Lichtbogens stetig an. Eine Abweichung des Stromes vom Sollwert gibt also im gesamten Bereich zwischen unterbrochenem Lichtbogen und Kurzschluß mit dem Bad über das Vorzeichen der Abweichung eine eindeutige Anweisung, in welcher Richtung die Elektrode verstellt werden muß. Anheben bei zu großem Strom und Absenken bei zu kleinem Strom. Die nicht lineare Abhängigkeit des Stromes von der Lichtbogenlänge hat keinen Nachteil, da für eine besonders schnelle Stromregelung kein zwingendes Bedürfnis besteht. Der harte Stromanstieg beim Berühren des Bades einer stromlos absenkenden Elektrode wird in schnellstmöglicher Weise von der Lichtbogenspannungsregelung erfaßt und ausgeregelt. Gibt man Strom und Leistung als Sollwerte vor, so wirkt, wie oben beschrieben, in diesem Falle der Strom auf die Elektrodenregelung ein, in dem der Stromregler die Führungsgröße für den Lichtbogenspannungsregler bildet. Der Leistungsregler würde die Führungsgröße für den zweiten Stromregler abgeben, der seinerseits auf den Stufenschalter des Transformators einwirkt und damit die Transformatorspannung ändert.

Normalerweise wird der Betreiber eines Ofens bestrebt sein, unter Ausnutzung einer für den Transformator und die Elektroden sinnvollen Stromgrenze die gewünschte Lichtbogenleistung in den Ofen einzubringen. Bei kleinerem Leistungsbedarf wird er also bestrebt sein, dies durch einen kürzeren Lichtbogen zu erreichen, solange nicht Badbewegungen so große und so schnelle Lichtbogenlängenänderungen verursachen, daß die vertikal bewegten trägen Massen nicht mehr mit der gewünschten Schnelligkeit folgen können. Kurze Lichtbögen bringen die bekannten Vorteile intensiver Wärmeübertragung auf das Bad und geringerer Verschleißwirkung auf die Zustellung.

Bei Verringerung der Lichtbogenleistung und Beibehalten des Stromes müssen sowohl die Elektrodenregelung als auch die Regelung der Transformatorspannung tätig werden, und zwar muß der Lichtbogen verkürzt werden und die dadurch hervorgerufene Stromsteigerung über eine Atsenkung der Ofenspannung wieder ausgeglichen werden.

Nach einer Weiterbildung der Erfindung wird das Stellglied Transformatorspannung stets von einem Stromregelkreis angesteuert, dem im Fall einer Leistungsregelung ein Leistungsregelkreis überlagert ist. Der dem Stromregler überlagerte Leistungsregler liefert dann die Führungsgröße für den Stromregler. Auf die Elektrodenverstellung wirkt in allen Fällen unmittelbar nur der Lichtbogenspannungsregler ein. Desgleichen löst die in den Ansprüchen 4 bis 8 beschriebene Vorrichtung den betreffenden obengenannten Aufgabenteil. Insbesondere weist diese Vorrichtung, bedingt durch die vorbeschriebene Verfahrenslehre, zwei getrennte Stromregler, von denen der eine mit dem Transformator und der andere mit dem Spannungsbildner für den Elektrodenhubantrieb verbunden ist, auf. Der mit dem Transformator verbundene Stromregler ist ggf. mit einem Leistungsregler verbindbar, wobei der Leistungsregler dem Stromregler überlagert ist und dessen Führungsgröße liefert.

Somit ergibt sich für den zweckmäßigerweise verwendeten Stufenschalterantrieb des Transformators entweder die Möglichkeit, die Transformatorspannung direkt über eine Sollwertvorgabe zuzuführen oder über den Stufenschalter mittels des genannten Stromreglers, dem ggf. ein Leistungsregler überlagert ist, einzustellen. Der Hubantrieb wird über einen Spannungsregler betätigt, wobei die betreffende Steuerspannung entweder aus einem Stromregler oder aus einem Verschleißregler oder direkt als vorgegebene Sollgröße geliefert wird.

Sowohl der Stufenschalterantrieb des Transformators als auch der Spannungsregler können ihre Vorgaben (Stellgrößen) aus einem Bedienungsfeld erhalten, in dem die betreffenden Werte von Hand oder mit einer Programmeingabe eingegeben werden.

Ausführungsbeispiele der Erfindung sind in den Zeichnungen dargestellt. Es zeigen

Fig. 1 eine schematische Regelungsvorschrift nach dem erfindungsgemäßen Verfahren,

Fig. 2 eine Regelvorrichtung zur Durchführung dieses Verfahrens und

Fig. 3 eine schematische Darstellung des Bedienungsfeldes für eine Ofenanlage mit Meßsystem.

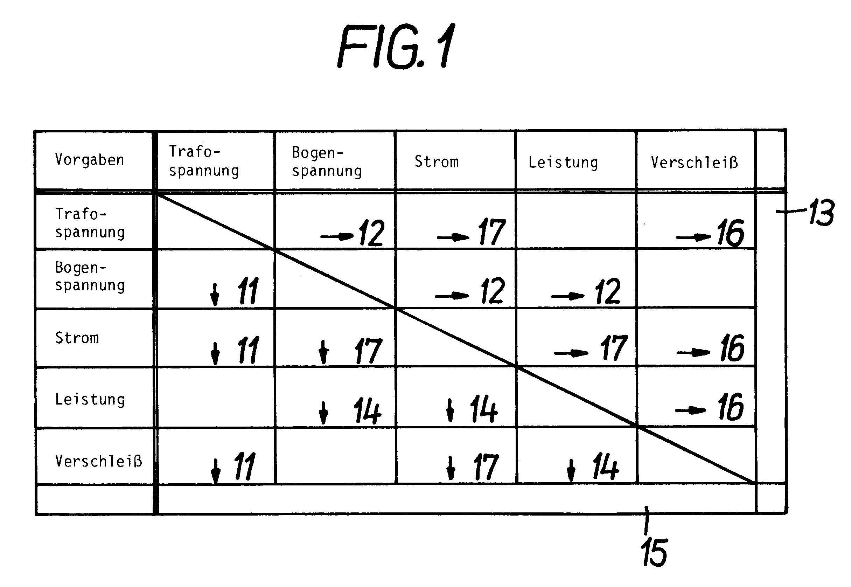

In Fig. 1 ist dargestellt, wie die zwei auszuwählenden Regelgrößen wirken müssen, um einen stabilen Ofenbetrieb zu erreichen. Eine Regelgröße Ofenspannung muß selbstverständlich unabhängig von den Vorgaben in der ersten Spalte stets auf das Stellglied Transformatorspannung 15 einwirken, da beide nahezu gleich groß sind (Regelgröße Ofenspannung jeweils mit 11 gekennzeichnet). Die Regelgröße Lichtbogenspannung 12 muß entsprechend stets auf die Elektrodenregelung 13 einwirken, da Lichtbogenlänge und Lichtbogenspannung weitgehend einander proportional sind. Wie Fig. 1 zeigt, soll eine Leistungsregelung 14 stets auf das Stellglied Transformatorspannung 15 wirken, während eine Regelung auf Verschleißgröße 16, die aus dem Produkt des Quadrats der Lichtbogenofenspannung und dem Lichtbogenstrom gebildet wird, stets auf die Elektrodenregelung 13 wirken soll. Ist als zweite Regelgröße eine Regelung auf den Elektrodenstrom 17 vorgesehen, dann muß die Stromregelung stets auf die noch freie Stellgröße einwirken, also entweder auf die Stellgröße Transformatorspannung 15 einwirken oder als überlagerte Regelgröße die Führungsgröße für den Lichtbogenspannungsregelkreis abgeben. Die Kombinationen Leistung mit Transformatorspannung und Verschleiß mit Bogenspannung sind auszuschließen, weshalb die betreffenden Felder nicht bezeichnet sind.

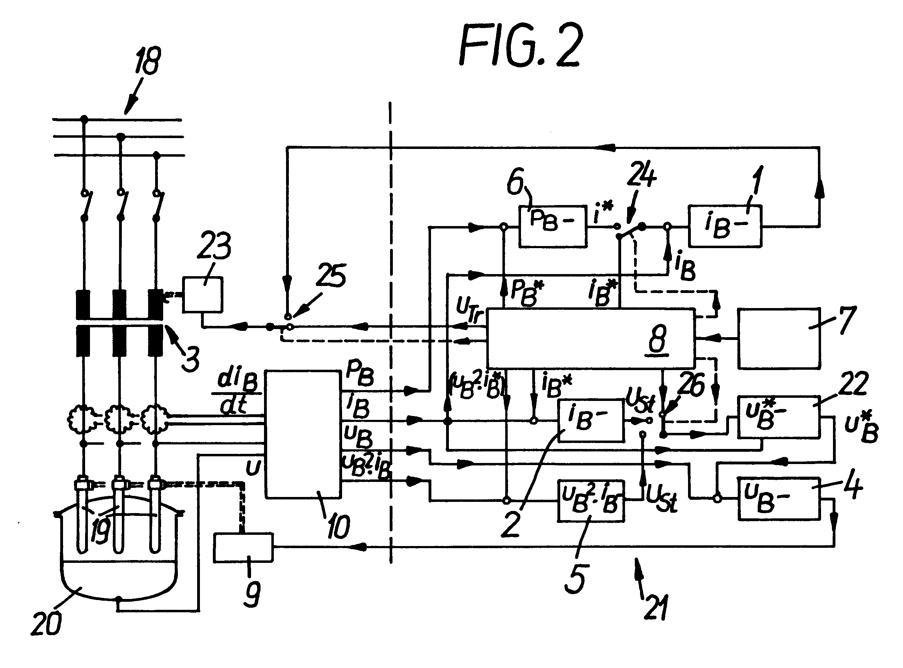

Die in Fig. 2 dargestellte Vorrichtung besteht im einzelnen aus einer Ofenanlage 18 und einer Meßeinrichtung 10. Die Ofenanlage 18 besteht im wesentlichen aus einem Transformator 3 mit Stufenschalterantrieb 23, worüber die Spannung zwischen den Elektroden 19 und dem Bad 20 geliefert wird. Die Meßgrößen Strom $i_B$, Spannung $u_B$, Verschleiß $u_B^2 \bullet i_B$ und Leistung $p_B$ werden von der Meßeinrichtung aus dem Differentialquotienten $di_B/dt$ und der Spannung, d.h. aus der zeitlichen Ableitung des Elektrodenstroms und der Elektrodenspannung, gewonnen. Die Elektrodenhöhenstandsregelung wird über einen Elektrodenhubantrieb 9 durchgeführt.

Zentraler Bestandteil der Regelvorrichtung 21 ist das zentrale Bedienungsfeld 8, worüber alle Sollwerte für den Elektrodenstrom, die Elektrodenspannung, die Elektrodenleistung und den Verschleißkoeffizienten abgegeben werden.

Die genannten Sollgrößen sind jeweils mit einem * gekennzeichnet. Das Bedienungsfeld ist demnach mit den jeweiligen Reglern, im einzelnen den Stromreglern 1 und 2, dem Leistungsregler 6 und dem Verschleißregler 5 direkt zur Abgabe der betreffenden Sollwerte verbunden. Die genannten Regler 1, 2, 4, 5 und 6 sind ferner zur Aufnahme der betreffenden gemessenen Istgrößen mit der Meßeinrichtung 10 verbunden. Ferner besitzt das Bedienungsfeld 8 auch noch eine direkte Verbindung mit dem Stufenschalterantrieb 23 und über den Sollwertbildner 22 eine Verbindung mit dem Spannungsregler 4 für den Elektrodenhubantrieb 9, mit dem dieser unmittelbar verbunden ist. Die in Fig. 2 dargestellte Schaltung sieht außerdem vor, die im Spannungsbildner 22 zu erzeugende Spannung in Abhängigkeit vom gemessenen Elektrodenstrom $i_B$ zu bilden, wozu der Spannungsbildner 22 direkt mit der Meßeinrichtung 10 als auch mit dem Bedienungsfeld 8, aus dem es jeweils gespeist wird, als auch mit dem Spannungsregler 4 verbunden ist. Ebenso ist eine direkte Steuerung des Bedienungsfeldes 8 durch eine mit ihr verbundene Programmeingabe 7 vorgesehen. Die in Fig. 2 dargestellte Schaltung sieht vor, daß über einen Schalter 24 wahlweise der Stufenschalterantrieb 23 direkt mit dem $i_B$-Regler 1 verbunden werden kann oder mit dem $p_B$-Regler so verbunden werden kann, daß der $p_B$-Regler dem $i_B$-Regler überlagert ist und die Führungsgröße für den Stromregler 1 liefert. Dementsprechend kann der Stufenschalterantrieb 23 über Schalter 25 wahlweise mit dem Stromregler 1 oder unmittelbar mit dem Bedienungsfeld 8 verbunden werden.

Schaltmöglichkeiten für den Elektrodenhubantrieb 9 sind ebenfalls dergestalt vorgesehen, daß dieser über den Spannungsregler 4 jeweils seinen Sollwert $U_{st}$ unmittelbar vom Bedienungsfeld oder vom Strom regler 2 oder vom Verschleißregler 5 erhält. Hierzu ist ein Schalter 26 vorgesehen.

Die zuvor beschriebene Anlage arbeitet folgendermaßen. Das Bedienungsfeld 8 liefert die Sollwerte für die Regelgrößen, die entweder durch Handeinstellung am Bedienungsfeld oder von der Programmeingabe 7 her vorgegeben werden. Die Programmeingabe 7 kann entweder von einem Festprogramm oder von einem Rechner kommen

Der Elektrodenhubantrieb 9 wird stets über den Spannungsregler 4 ausgesteuert. Nach oben Gesagtem können die Regler 2 und 5, der Stromregler und der Verschleißgrößenregler, nur als überlagerte Regelkreise des Spannungsreglers 4 wirken. Beide geben die Führungsgröße für den Spannungsregler 4 an diesen weiter.

Der Stufenschalterantrieb 23 für den Ofentransformator 3 wird entweder direkt vom Bedienungsfeld durch Handeingabe oder von der Programmeingabe 7 über $U_{Tr}$ angesteuert. Soll die Transformatorspannung geregelt werden, so erfolgt die Ansteuerung dagegen über den Stromregler 1, dem im Falle einer gewünschten Leistungsregelung der Leistungsregler 6 überlagert ist.

Die gesamte Darstellung bezieht sich auf eine der drei Phasen des Drehstromsystems des Lichtbogenofens. Dies besagt aber nicht, daß für alle drei Phasen getrennte Sollwertvorgaben zwingend vorzunehmen sind. Die Entscheidung, ob getrennte oder gemeinsame Sollwertvorgaben vorzusehen sind, wird weitgehend davon abhängen, ob der Ofentransformator eine unsymmetrische Einstellung der Transformatorspannungen gestattet oder nicht. Gegebenenfalls wird eine Symmetrierung der drei Phasen auf den Stromregler 1 für den Stufenschalterantrieb 23 anzuwenden sein. Da der Leistungsregler 6 nur in einem dem Stromregler 1 überlagerten Regelkreis auftreten kann, würde eine entsprechende Symmetrierung auch im Falle einer Leistungsregelung vorgenommen werden Insbesondere für den Leistungsregler wird es zweckmäßig sein, nur die Gesamtleistung der Ofenanlage zu erfassen und im Falle eines unsymmetrisch einstellbaren Ofentransformators 3 den Stromsollwert nur für die Führungsphase vorzugeben, für die anderen Phasen wird dann die Einregelung des Stromes indirekt über eine Symmetrieeinrichtung erfolgen. Für den Fall eines nicht unsymmetrisch einstellbaren Ofentransformators müssen entweder Unsymmetrien der Ströme oder der Bogenspannungen oder beider in Kauf genommen werden. Auch in diesem Falle ist es zweckmäßig, vom Leistungsregler den Stromsollwert nur für eine Phase vorgeben zu lassen. Diese Phase bestimmt dann die sich einstellende Transformatorstufe, bei z.B. vorgegebenen gleichen Bogenspannungen in allen drei Phasen ergeben sich dann zwangsläufig die Ströme in den beiden anderen Phasen.

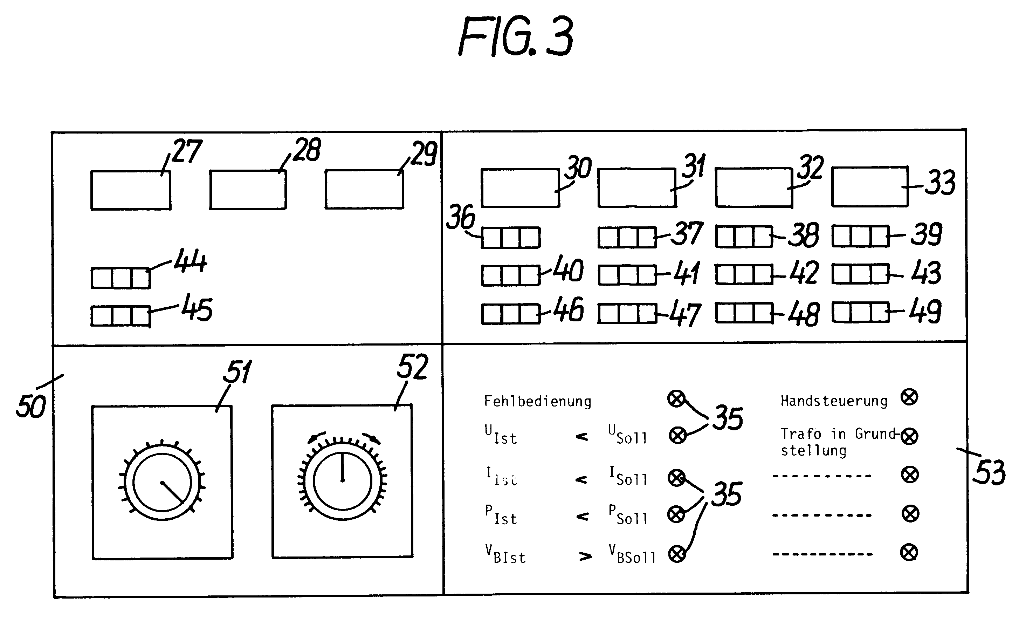

Im in Fig. 3 dargestellten Bedienungsfeld 8 sind in der obersten Reihe die Wahltasten 27 bis 33 angeordnet, mit denen die gewünschte Kombination der Regelgrößen untereinander bzw. zwischen Regelgröße und Stellgröße angewählt werden kann. Wahltaste 29 ist für die rechnergesteuerte Regelung vorgesehen. Die Wahltastenfelder leuchten bei Betätigung auf und zeigen damit deutlich die gewählten Größen an. Gleichzeitig wird der Überwachung 53 gemeldet, daß die entsprechende Taste gedrückt wurde. Damit wird eine eventuelle Fehlbedienung erkannt und über Anzeigen 35 angezeigt.

In der zweiten Reihe sind die Schalter 36 bis 39 für die Sollwertvorgaben für die Größen Lichtbogenspannung, Lichtbogenstrom, Lichtbogenleistung und Verschleiß angebracht. Um Irrtümer zu verhindern, ist für jeden der vier möglichen Sollwerte ein eigener Codierschalter vorgesehen. In der dritten Reihe werden die eingestellten Sollwerte auf LED oder LCD-7 Segmentanzeigen 40 bis 43 angezeigt. Der Trafospannungssollwert wird über Anzeige 44 angezeigt. In der vierten Zeile werden die Istwerte zur Anzeige gebracht. Hierzu dienen entsprechende LED oder LCD-7 Segmentanzeigen 45 bis 49. Da sowohl die Soll- als auch die Istwerte angezeigt werden, ist auch bei rechnergesteuertem Betrieb jederzeit eine Kontrolle möglich. Im Feld 50 sind die Steller 51 und 52 für die Trafospannung und die Elektrodengeschwindigkeit bei Handbetrieb angeordnet. Der Trafo kann über den Stufenschalterantrieb 23 in bestimmten Stufen geschaltet werden; die Elektrodenverstellung ist gewünschtermaßen stufenlos. Das Feld 53 dient der Überwachung. Wie bereits oben erwähnt, werden die Fehlbedienung sowie das Nichterreichen der geforderten Sollwerte und ähnliche Größen über Anzeigen 35 angezeigt.

Das Bedienungsfeld wird wie folgt bedient. Wird die Programmtaste 29 gedrückt, dann werden zwei Sollwerte einem externen Programm entnommen, dessen Daten über die Programmeingabe 7 in das Bedienungsfeld 8 einlaufen. In allen anderen Fällen müssen zwei der übrigen sechs Tasten in der oberen Zeile des Bedienungsfeldes gedrückt werden. Z.B. entspräche es einer gängigen Handhabung, die Trafospannung von Hand einzustellen, d.h. die linke Taste 27 zu drücken und den Steller 51 zu bedienen und durch Drücken der Wahltaste 31 auf den darunter einstellbaren Sollwert einregeln zu lassen. Im Falle dieser Kombination würde die Stromregelung automatisch auf das Stellglied Elektrodenverstellung einwirken. Das Eintasten von Kombinationen, die nach Fig. 1 nicht zugelassen sind, würde automatisch zum Aufleuchten der Anzeige 35 "Fehlbedienung" im Beobachtungsfeld 53 führen.

Im übrigen ist es aber dem Bedienungspersonal des Lichtbogenofens zu überlassen, welche Zweierkombination unter den sechs Tasten angewählt wird. Eine sinnvolle Kombination könnte z.B. auch die Vorgabe der Sollwerte von Strom und Leistung sein. Wie bereits oben beschrieben, wirde in diesem Falle der Strom auf die Elektrodenregelung wirken, in dem der Stromregler die Führungsgröße für den Lichtbogenspannungsregler bildet. Der Leistungsregler würde die Führungsgröße für den zweiten Stromregler abgeben, der seinerseits auf den Stufenschalter des Transformators einwirkt und damit die Transformatorspannung ändert. Die auf dem Bedienungsfeld einstellbaren Sollwerte sind in Fig. 2 mit einem * gekennzeichnet.

## Patentansprüche

1. Verfahren zur Regelung von Lichtbogenöfen mit verstellbaren Transformatorspannung und verstellbaren Elektrodenhöhenständen und mit einer auf die Elektrodenverstellung unmittelbar einwirkenden Lichtbogenspannungsregelung, dadurch gekennzeichnet, daß unter Verwendung von maximal zwei der nachfolgenden Regelgrößen

   - Lichtbogenspannung $u_B$
   - Lichtbogenstrom $i_B$
   - Lichtbogenleistung $P_B$
   - Verschleißgröße $u^2_B \cdot i_B$

   die Transformatorspannung und der Elektrodenhöhenstand in einer der folgenden Kombinationen verstellt wird:

   a) Festeinstellen der Transformatorspannung und Regeln der Lichtbogenspannung,

   b) Festeinstellung der Transformatorspannung und Regeln des Lichtbogenstromes,

   c) Festeinstellung der Transformatorspannung und Regeln der Verschleißgröße,

   d) Stellen der Transformatorspannung über den Lichtbogenstrom und Stellen des Elektrodenhöhenstandes über die Lichtbogenspannung,

   e) Stellen der Transformatorspannung über die Lichtbogenleistung und Stellen des Elektrodenhohenstandes über die Lichtbogenspannung,

f) Stellen der Transformatorspannung über die Lichtbogenleistung und Stellen des Elektrodenhohenstandes über den Elektrodenstrom,

g) Stellen der Transformatorspannung über den Lichtbogenstrom und Stellen des Elektrodenhöhenstandes über die Verschleißgröße,

h) Stellen der Transformatorspannung über die Lichtbogenleistung und Stellen des Elektrodenhöhenstandes über die Verschleißgröße,

wobei die Ofenspannung die Stellgröße der Transformatorspannung ist.

2. Verfahren nach Anspruch 1, dadurch gekennzeichnet, daß das Stellglied Transformatorspannung von einem Stromregelkreis angesteuert wird.

3. Verfahren nach Anspruch 2, dadurch gekennzeichnet, daß bei einer Leistungsregelung das Stellglied Transformatorspannung von einem Stromregelkreis angesteuert wird, dem ein Leistungsregelkreis überlagert ist.

4. Vorrichtung zur Durchführung des Verfahrens nach den Ansprüchen 1 bis 3, mit einer Meßvorrichtung (10) für die Spannung, den Strom und die Leistung des Lichtbogens sowie zur Ermittlung der aus Spannung und Leistung abgeleiteten Verschleißgröße und einer damit verbundenen Einrichtung zur Regelung der Transformatorspannung und des Elektrodenhubantriebes mit einem mit dem Spannungsregler verbindbaren Verschleißregler (5) sowie zwei getrennten Stromreglern (1, 2), von denen der erste (2) mit einem Spannungsregler (4) für den Elektrodenhubantrieb verbunden ist, dadurch gekennzeichnet,

- daß der Verschleißregler (5) alternativ zum ersten Stromregler (2) mit dem Eingang des Spannungsreglers (4) über einen Spannungssollwertbildner (22) verbindbar ist,
- daß der zweite Stromregler (1) mit dem Transformator (3) verbunden ist,
- daß zur Sollwertenvorgabe ein Bedienungsfeld (8) vorgesehen ist,
  das mit den jeweiligen Reglern, nämlich Leistungsregler (6), Verschleißregler (5), Stromregler (1) und Stromregler (2) unmittelbar verbunden ist, und
  das mittelbar mit einem Stufenschalterantrieb (23) und
  über den Sollwert-Bildner (22) und über den Spannungsregler (4) mit dem Elektrodenhubantrieb (9) verbunden ist, und

- daß eine Programmeingabestation (7) an das zentrale Bedienungsfeld (8) angeschlossen ist.

5. Vorrichtung nach Anspruch 4, dadurch gekennzeichnet, daß der mit dem Transformator (3) verbundene Stromregler (1) mit einem Leistungsregler (6) verbindbar ist.

6. Vorrichtung nach Ansprüchen 4 oder 5, dadurch gekennzeichnet, daß der Transformator (3) mit dem Stufenschalterantrieb (23), verbunden ist.

7. Vorrichtung nach Ansprüchen 4 bis 6, dadurch gekennzeichnet, daß der Stufenschalterantrieb des Transformators (3) umschaltbar mit einem von Hand oder einer Programmeingabe (7) steuerbaren Spannungsgeber des Bedienungsfeldes (8) oder mit dem Stromregler (1) verbunden ist.

8. Vorrichtung nach Anspruch 4, dadurch gekennzeichnet, daß der Spannungsregler (4) mit einer von Hand oder von einer Programmeingabe (7) angesteuerten Spannungsquelle des Bedienungsfeldes (8) verbindbar ist.

**Claims**

1. Method for controlling arc furnaces with an adjustable transformer voltage and adjustable electrode heights and with an arc voltage control which directly affects the electrode adjustment, characterised in that, using a maximum of two of the following controlled variables

- arc voltage $U_B$
- arc current $i_B$
- arc power $P_B$
- wear value $U_{2B} \cdot i_B$,

the transformer voltage and the electrode height are adjusted in one of the following combinations:

a) the transformer voltage is fixed and the arc voltage is controlled,

b) the transformer voltage is fixed and the arc current is controlled,

c) the transformer voltage is fixed and the wear value is controlled,

d) the transformer voltage is set via the arc current and the electrode height is set via the arc voltage,

e) the transformer voltage is set via the arc power and the electrode height is set via the arc voltage,

f) the transformer voltage is set via the arc power and the electrode height is set via the electrode current,

g) the transformer voltage is set via the arc current and the electrode height is set via the wear value,

h) the transformer voltage is set via the arc power and the electrode height is set via the wear value,

in which the furnace voltage is the correcting variable for the transformer voltage.

2.   Method according to claim 1, characterised in that the transformer voltage correcting device is activated by a current control circuit.

3.   Method according to claim 2, characterised in that, when the power is controlled, the transformer voltage correcting device is activated by a current control circuit, on which a power control circuit is superimposed.

4.   Device for carrying out the method according to claims 1 to 3, with a measuring device (10) for the voltage, the current and the power of the arc, and for determining the wear value, which is derived from the voltage and the power, and a device connected thereto for controlling the transformer voltage and the electrode lifting drive, with a wear controller (5), which can be connected to the voltage controller, and two separate current controllers (1, 2), the first (2) of which is connected to a voltage controller (4) for the electrode lifting drive, characterised in that the wear controller (5) can be connected via a desired voltage value generator (22) to the input of the voltage controller (4) as an alternative to the first current controller (2), that the second current controller (1) is connected to the transformer (3), that a control panel (8) is provided to preset the desired values, which panel is connected directly to the respective controllers, i.e. the power controller (6), the wear controller (5), the current controller (1) and the current controller (2), indirectly to a step switch drive (23) and via the desired value generator (22) and the voltage controller (4) to the electrode lifting drive (9), and that a program input station (7) is connected to the central control panel (8).

5.   Device according to claim 4, characterised in that the current controller (1), which is connected to the transformer (3), can be connected to a power controller (6).

6.   Device according to claim 4 or 5, characterised in that the transformer (3) is connected to the step switch drive (23).

7.   Device according to claims 4 to 6, characterised in that the step switch drive of the transformer (3) is connected to a voltage generator, which can be controlled manually or by a program input (7), of the control panel (8) or to the current controller (1) such that it can be switched over.

8.   Device according to Claim 4, characterised in that the voltage controller (4) can be connected to a voltage source, which is controlled manually or by a program input (7), of the control panel (8).

**Revendications**

1.   Procédé pour la régulation de fours à arc comprenant une tension de transformateur réglable et des positions en hauteur réglables pour les électrodes, et comprenant également une régulation de la tension d'arc agissant directement sur le réglage des électrodes, caractérisé en ce qu'en utilisant au maximum deux des grandeurs de réglage suivantes:
     - tension d'arc $u_B$
     - courant d'arc $i_B$
     - puissance d'arc $P_B$
     - grandeur d'usure $u^2_B . i_B$
la tension de transformateur et la position en hauteur des électrodes sont réglées selon l'une des combinaisons suivantes:
     a) réglage fixe de la tension de transformateur et régulation de la tension d'arc,
     b) réglage fixe de la tension de transformateur et régulation du courant d'arc,
     c) réglage fixe de la tension de transformateur et régulation de la grandeur d'usure,
     d) réglage de la tension de transformateur par l'intermédiaire du courant d'arc, et réglage de la position en hauteur des électrodes par l'intermédiaire de la tension d'arc,
     e) réglage de la tension de transformateur par l'intermédiaire de la puissance d'arc, et réglage de la position en hauteur des électrodes par l'intermédiaire de la tension d'arc,
     f) réglage de la tension de transformateur par l'intermédiaire de la puissance d'arc, et réglage de la position en hauteur des électrodes par l'intermédiaire du courant d'électrode,
     g) réglage de la tension de transformateur par l'intermédiaire du courant d'arc, et réglage de la position en hauteur des électrodes par l'intermédiaire de le grandeur d'usure,

h) réglage de la tension de transformateur par l'intermédiaire de la puissance d'arc, et réglage de la position en hauteur des électrodes par l'intermédiaire de la grandeur d'usure,

la tension de four étant le grandeur de réglage de la tension de transformateur.

2. Procédé selon la revendication 1, caractérisé en ce que l'organe de réglage de la tension de transformateur est commandé par une boucle de régulation du courant.

3. Procédé selon la revendication 2, caractérisé en ce que dans le cas d'une régulation de la puissance, l'organe de réglage de la tension de transformateur est commandé par une boucle de régulation du courant à laquelle est superposée une boucle de régulation de la puissance.

4. Dispositif pour la mise en oeuvre du procédé selon les revendications 1 à 3, comportant un dispositif de mesure (10) pour la tension, le courant et la puissance de l'arc, ainsi que pour l'élaboration de la grandeur d'usure dérivée de la tension et de la puissance, comportant également un dispositif relié au précédent pour la régulation de la tension de transformateur et du système d'entraînement du déplacement des électrodes qui comprend un régulateur d'usure (5) susceptible d'être relié au régulateur de tension, ainsi que deux régulateurs de courant séparés (1,2) dont le premier (2) est relié à un régulateur de tension (4) pour le système d'entraînement du déplacement des électrodes, caractérisé

- en ce que le régulateur d'usure (5) peut être relié, en variante au premier régulateur de courant (2), à l'entrée du régulateur de tension (4) par l'intermédiaire d'un dispositif d'élaboration de valeur de consigne de tension (22),
- en ce que le second régulateur de courant (1) est relié eu transformateur (3),
- en ce que pour prédéfinir des valeurs de consigne, est prévu un tableau de commande (8) qui est relié directement aux régulateurs considérés, à savoir le régulateur de puissance (6), le régulateur d'usure (5), ainsi que le régulateur de courant (1) et le régulateur de courant (2), et qui est relié indirectement à un dispositif d'entraînement de graduateur (23), et par l'intermédiaire du dispositif d'élaboration de valeur de consigne (22) et par l'intermédiaire du régulateur de tension (4), au dispositif d'entraînement de déplacement des électrodes (9), et

- en ce qu'un poste d'introduction de programmes (7) est raccordé au tableau de commande central (8).

5. Dispositif selon la revendication 4, caractérisé en ce que le régulateur de courant (1) relié au transformateur (3) est susceptible d'être relié à un régulateur de puissance (6).

6. Dispositif selon la revendication 4 ou 5, caractérisé en ce que le transformateur (3) est relié au dispositif d'entraînement de graduateur (23).

7. Dispositif selon les revendications 4 à 6, caractérisé en ce que le dispositif d'entraînement de graduateur du transformateur (3) est relié de manière commutable à un émetteur de valeurs de tension du tableau de commande (8), pouvant être commandé à la main ou par une introduction de programme (7), ou bien au régulateur de courant (1).

8. Dispositif selon la revendication 4, caractérisé en ce que le régulateur de tension (4) peut être relié à une source de tension, coandée à la main ou par une introduction de programme (7), du tableau de commande (8).

# FIG.1

| Vorgaben | Trafo-spannung | Bogen-spannung | Strom | Leistung | Verschleiß | |
|---|---|---|---|---|---|---|
| Trafo-spannung | | →12 | →17 | | →16 | |
| Bogen-spannung | ↓11 | | →12 | →12 | | |
| Strom | ↓11 | ↓17 | | →17 | →16 | |
| Leistung | | ↓14 | ↓14 | | →16 | |
| Verschleiß | ↓11 | | ↓17 | ↓14 | | |

13

15

EP 0 199 936 B1

# FIG.2

EP 0 199 936 B1

# FIG. 3

EP 0 199 936 B1